(19) Europäisches Patentamt
European Patent Office
Office européen des brevets

(11) Veröffentlichungsnummer: **0 363 877 A1**

(12) **EUROPÄISCHE PATENTANMELDUNG**

(21) Anmeldenummer: **89118737.9**

(22) Anmeldetag: **09.10.89**

(51) Int. Cl.5: **C08G 65/32 , C08G 65/20 , C07C 217/28 , C07C 217/42 , C07C 213/00**

(30) Priorität: **14.10.88 DE 3835040**

(43) Veröffentlichungstag der Anmeldung: **18.04.90 Patentblatt 90/16**

(84) Benannte Vertragsstaaten: **BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Koehler, Ulrich, Dr.**
**Werderstr. 48**
**D-6900 Heidelberg(DE)**
Erfinder: **Hickmann, Eckhard, Dr.**
**Kantstrasse 23**
**D-6701 Dannstadt-Schauernheim(DE)**
Erfinder: **Siegel, Hardo, Dr.**
**Hans-Purrmann-Allee 25**
**D-6720 Speyer(DE)**

(54) **Polytetrahydrofuranderivate und ihre Herstellung.**

(57) Polytetrahydrofuranderivate der allgemeinen Formel

$$X-(CH_2)_m-\overset{H}{N}-(CH_2)_4-O-\left[(CH_2)_4-O\right]_n-(CH_2)_4-\overset{H}{N}-(CH_2)_m-X \qquad I,$$

in der X eine Amino- oder Hydroxigruppe, n eine Zahl von 1 bis 150 und m eine Zahl von 1 bis 20 bedeuten, und ein Verfahren zu ihrer Herstellung, bei dem man Polytetrahydrofuranderivate der allgemeinen Formel

$RO_2SO-(CH_2)_4-O[(CH_2)_4-O]_n-(CH_2)_4-OSO_2R$ IV,

in der R einen Alkyl- oder Arylrest und n eine Zahl von 1 bis 150 bedeuten, mit Verbindungen der Formel

$X-(CH_2)_m-NH_2$ V,

in der X eine Amino- oder Hydroxigruppe bedeutet und m für eine Zahl von 1 bis 20 steht, umsetzt.

EP 0 363 877 A1

## Neue Polytetrahydrofuranderivate und ihre Herstellung

Diese Erfindung betrifft neue Polytetrahydrofuranderivate und ein Verfahren zu ihrer Herstellung.

Polytetrahydrofuran und Derivate des Polytetrahydrofurans haben als Zwischenprodukte für die Herstellung von Polymeren großes Interesse gefunden. Besonders gesucht sind hierbei Polytetrahydrofuranderivate mit endständigen reaktiven Gruppen wie Polytetrahydrofuran-$\omega,\omega'$-diamine (US-PS 3,824,198), die den Einbau der Polybutandiol-Kette in Polymere ermöglichen.

Gegenstand dieser Erfindung sind neue Polytetrahydrofuranderivate, die sich vorteilhaft zum Aufbau polymerer Kunststoffe eignen. Diese neuen Verbindungen weisen den Vorteil einer Bisfunktionalität an jedem der beiden Kettenenden auf und eignen sich somit als Vernetzer. Sie haben die allgemeine Formel

$$X-(CH_2)_m-\overset{H}{N}-(CH_2)_4-O-\left[(CH_2)_4-O\right]_n-(CH_2)_4-\overset{H}{N}-(CH_2)_m-X \qquad I,$$

in der X eine Amino- oder Hydroxigruppe, n eine Zahl von 1 bis 150, vorzugsweise 3 bis 70, insbesondere 3 bis 55 und m eine Zahl von 1 bis 20, vorzugsweise 2 bis 12, insbesondere 2 bis 8 bedeuten.

Polytetrahydrofuranderivate dieser Art sind somit Bis-N,N'-(1-aminoalkyl)-polybutandiol-(1,4)-$\omega,\omega'$-diamine der Formel

$$H_2N-(CH_2)_m-\overset{H}{N}-(CH_2)_4-O-\left[(CH_2)_4-O\right]_n-(CH_2)_4-\overset{H}{N}-(CH_2)_m-NH_2 \qquad II$$

sowie Bis-N,N'-(1-hydroxialkyl)-polybutandiol-(1,4)-$\omega,\omega'$-diamine der Formel

$$HO-(CH_2)_m-\overset{H}{N}-(CH_2)_4-O-\left[(CH_2)_4-O\right]_n-(CH_2)_4-\overset{H}{N}-(CH_2)_m-OH \qquad III,$$

in denen n und m die obengenannte Bedeutung haben.

Man stellt die neuen Polytetrahydrofuranderivate der Formel I dadurch her, daß man Polytetrahydrofuranderivate der allgemeinen Formel

$RO_2SO-(CH_2)_4-O\left[(CH_2)_4-O\right]_n-(CH_2)_4-OSO_2R$ IV,

in der R einen Alkyl- oder Arylrest bedeutet und n die obengenannte Bedeutung hat, mit Verbindungen der Formel

$X-(CH_2)_m-NH_2$ V,

in der X eine Amino- oder Hydroxigruppe bedeutet und m die obengenannte Bedeutung hat, umsetzt.

In den Polytetrahydrofuranderivaten der Formel IV steht R für einen Alkylrest, der z.B. 1 bis 4 C-Atome aufweist oder für einen Arylrest, wie den Benzol- oder Toluolrest. Verbindungen der Formel IV sind somit z.B. das in der JP-OS 70/16443 beschriebene Polytetrahydrofuran-bis-p-toluolsulfonat oder die in der älteren deutschen Patentanmeldung DE-OS 3 834 265 beschriebenen Polytetrahydrofuran-bisalkylsulfonate. Man setzt die Verbindungen der Formel IV mit den Aminen der Formel V in Abwesenheit oder in Anwesenheit von Lösungsmitteln z.B. bei Temperaturen bis 100 °C, vorzugsweise 20 bis 70 °C um. Als Lösungsmittel kommen solche in Betracht, die mit den Reaktionspartnern unter den Umsetzungsbedingungen nicht reagieren. Das sind z.B. aromatische Lösungsmittel, wie Toluol, Ether, wie Diethylether, Methyl-tert.-butylether, Alkohole, wie Methanol, Ethanol oder tertiäre Amine, wie Triethylamin.

Die Amine der Formel V werden zweckmäßigerweise in mindestens stöchiometrischer Menge eingesetzt. Beispielsweise wendet man auf 1 Mol der Verbindung der Formel IV 2 bis 500, vorzugsweise 10 bis 200 Mol des Amins der Formel V an. Überschüssiges Amin und gegebenenfalls mitverwendetes Lösungsmittel werden nach erfolgter Umsetzung z.B. durch Destillation zurückgewonnen.

Beispiel 1

In einer mit Rückflußkühler und Tropftrichter versehenen 200-ml-Rühr-apparatur werden bei 50 °C 601 g (10 mol) Ethandiamin in 1000 ml Methyl-tert.-butylether (MTBE) vorgelegt. Man tropft unter Rühren 215,6 g (0.1 mol) Polytetrahydrofuran-bis-methansulfonat (Molgewicht = 2156; n = 25,5) während 1 h zu. Das Reaktionsgemisch wird dann noch 12 h gerührt und am Rotationsverdampfer eingeengt. Das überschüssige Ethandiamin wird abdestilliert (80 °C/70 mbar) und der Rückstand in 700 ml 2 N Natronlauge gegeben. Man schüttelt dreimal mit je 300 ml Toluol aus, trocknet und zieht das Lösungsmittel der vereinigten organischen Phasen bei 70 °C/60 mbar am rotationsverdampfer ab. Es hinterbleiben 203,2 g der Verbindung der Formel II (mit n = 25,5 und m = 2) als ein gelbes, viskoses Öl (97,5 % Ausbeute).

Analysen:

prim. N = 1,3 %
sek. N = 1,2 %
tert. N = 0,1 %
OH-Zahl < 1
$^1$H-NMR ($CDCl_3$): $\delta$ = 3,4 (m, Polyether-$CH_2$); 2,78 (t, $H_2N$-$\underline{CH_2}$-); 2,62 (m, $H_2N$-$CH_2$-$\underline{CH_2}$-NH-$\underline{CH_2}$-), 1,6 (m, Polyether-$CH_2$); 1,3 (s, $NH_2$, NH)
IR (Film): 2939, 2858, 2797, 1483, 1466, 1447, 1366, 1209, 1113, 984 $cm^{-1}$.

Das in diesem Beispiel verwendete Polytetrahydrofuran-bismethylsulfonat läßt sich folgendermaßen herstellen:

In einer mit Rückflußkühler, Tropftrichter und Innenthermometer versehenen 500 ml-Rührapparatur werden bei 10 bis 15 °C 200 g Polytetrahydrofuran mit dem Molekulargewicht 2000 (ca. 0,1 mol) in 170 ml Methyl-tert.-butylether (MTB) vorgelegt. Dann werden 24,3 g Triethylamin (0,24 mol) zugegeben. Danach tropft man unter gutem Rühren während ca. 1 Stunde 26,3 g Methansulfonsäurechlorid (0,23 mol) ein und hält das Reaktionsgemisch noch eine weitere Stunde bei 10 bis 15 °C.

Zur Abtrennung der gebildeten Ammoniumsalze wird das Reaktionsgemisch mit 400 ml Wasser versetzt. Die organische obere Phase wird zweimal mit je 100 ml gesättigter wäßriger NaCl-Lösung ausgeschüttelt. Nach dem Trocknen der organischen Phase wird das Lösungsmittel abdestilliert. Es bleiben 215 g ($\hat{=}$ ca. 0,1 mol, 100 % Ausbeute) Polytetrahydrofuran-bismethyl-sulfonat als farbloses, zähes Öl zurück (Erstarrungspunkt ca. 20 °C).

Analysen:

OH-Zahl : < 1
Säurezahl : < 1
Molekulargewicht (osm.) : 2160
$^1$H-NMR ($CDCL_3$): $\delta$ = 4.25 (t, $\alpha$-$CH_2$), 3.4 (m, Polyether $CH_2$), 3.0 (s, $OCH_3$), 1.85 (m, $\beta$-$CH_2$), 1.63 (m, Polyether-$CH_2$).
Die Bezeichnungen $\alpha$ und $\beta$ beziehen sich auf die Stellung zur Mesylatgruppe.
IR (Film): 2940, 2857, 2798, 1356, 1176, 1111, 1021, 974, 943, 528 $cm^{-1}$.

Beispiel 2

In einer mit Tropftrichter und Rückflußkühler versehenen 1000-ml-Rührapparatur werden bei 30 °C 305,4 g (5 mol) Ethanolamin in 500 ml Ethanol vorgelegt. Dazu werden unter Rühren 107,8 g (0.05 mol) Polytetrahydrofuran-bismethansulfonat (Molgewicht = 2156 und n = 25,5) getropft (ca. 30 min). Anschließend wird noch 48 h gerührt. Ethanol und Ethanolamin (60 °C/50 mbar) werden abdestilliert und der Rückstand in 350 ml 2 N Natronlauge gegeben. Man schüttelt das Gemisch dreimal mit je 100 ml MTBE aus und trocknet über $Na_2SO_4$. Nach Eindampfen des Lösungsmittels am Rotationsverdampfer hinterbleiben 188,3 g (94,2 %) des Polytetrahydrofuranderivates der Formel III (mit n = 25,5 und m = 2) als gelbes, viskoses Öl.

Analysen:

prim. N = 1,3 %

sek. N = < 0,1 %
OH-Zahl = 60
$^1$H-NMR ($CDCl_3$): $\delta$ = 3,8 (t, HO-$CH_2$-); 3,4 (m, Polyether-$CH_2$); 2,75 (t, HO-$CH_2$-$\underline{CH_2}$-NH); 2,62 (t, HO-$CH_2$-$CH_2$-NH-$\underline{CH_2}$); 2,5 (s, OH, NH); 1,6 (m, Polyether-$CH_2$).
IR (Film): 2942, 2864, 2804, 1492, 1475, 1373, 1252, 1210, 1123, 996, 750, 570 $cm^{-1}$.

**Ansprüche**

1. Polytetrahydrofuranderivate der allgemeinen Formel

$$X-(CH_2)_m-\overset{H}{N}-(CH_2)_4-O-\left[(CH_2)_4-O\right]_n-(CH_2)_4-\overset{H}{N}-(CH_2)_m-X \qquad I,$$

in der X eine Amino- oder Hydroxigruppe, n eine Zahl von 1 bis 150 und m eine Zahl von 1 bis 20 bedeuten.

2. Bis-N,N′-(1-aminoalkyl)-polybutandiol-(1,4)-ω,ω′-diamine der Formel

$$H_2N-(CH_2)_m-\overset{H}{N}-(CH_2)_4-O-\left[(CH_2)_4-O\right]_n-(CH_2)_4-\overset{H}{N}-(CH_2)_m-NH_2 \qquad II$$

in der m und n für die in Anspruch 1 genannten Zahlen stehen.

3. Bis-N,N′-(1-hydroxialkyl)-polybutandiol-(1,4)-ω,ω′-diamine der Formel

$$HO-(CH_2)_m-\overset{H}{N}-(CH_2)_4-O-\left[(CH_2)_4-O\right]_n-(CH_2)_4-\overset{H}{N}-(CH_2)_m-OH \qquad III,$$

in der n und m für die in Anspruch 1 genannten Zahlen stehen.

4. Verfahren zur Herstellung der Polytetrahydrofuranderivate nach Anspruch 1, dadurch gekennzeichnet, daß man Polytetrahydrofuranderivate der allgemeinen Formel
$RO_2SO-(CH_2)_4-O[(CH_2)_4-O]_n-(CH_2)_4-OSO_2R$ IV,
in der R einen Alkyl- oder Arylrest und n eine Zahl von 1 bis 150 bedeuten, mit Verbindungen der Formel
$X-(CH_2)_m-NH_2$ V,
in der X eine Amino- oder Hydroxigruppe bedeutet und m für eine Zahl von 1 bis 20 steht, umsetzt.

Europäisches Patentamt

# EUROPÄISCHER RECHERCHENBERICHT

Nummer der Anmeldung

EP 89 11 8737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 644 567 (S. SMITH et al.) * Beispiele 1-3; Spalte 5, Zeilen 42-55 *; & US - A - 38 24198 (Cat. D) | 1-4 | C 08 G 65/32<br>C 08 G 65/20<br>C 07 C 217/28<br>C 07 C 217/42<br>C 07 C 213/00 |
| A | US-A-4 281 199 (W.K. LANGDON) * Ansprüche 1,3,9 * | 1,2 | |
| A | DE-A-2 733 973 (BASF) * Ansprüche 1,2 * | 4 | |
| A | MAKROMOLEKULARE CHEMIE. RAPID COMMUNICATIONS Nr. 7, Juli 1984, Seiten 363-371, Heidelberg, DE; G. ZIEGAST et al.: "Linear and star-shaped hybrid polymers, 1" * Seiten 369,370 * | 1-4 | |

RECHERCHIERTE SACHGEBIETE (Int. Cl.5)

C 08 G 65/00
C 07 C 217/00
C 07 C 213/00

Der vorliegende Recherchenbericht wurde für alle Patentansprüche erstellt

| Recherchenort | Abschlußdatum der Recherche | Prüfer |
|---|---|---|
| BERLIN | 08-01-1990 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)